# EUROPEAN PATENT APPLICATION

(11) **EP 4 564 998 A1**
(43) Date of publication of application: **04.06.2025**
(21) Application number: 23845646.1
(22) Date of filing: 27.07.2023
(51) Int. Cl.: H04W 76/28, H04W 52/02

(54) **PROCESSING METHOD, AND DEVICE AND READABLE STORAGE MEDIUM**

(30) Priority: 29.07.2022 CN 202210908201
(71) Applicant: Vivo Mobile Communication Co., Ltd., Dongguan, Guangdong 523863 (CN)
(72) Inventor: WANG, Wen, Dongguan, Guangdong 523863 (CN)
(74) Representative: Lavoix
(86) International application number: PCT/CN2023/109578
(87) International publication number: WO 2024/022439

(57) **Abstract**

This application discloses a processing method, a device, and a readable storage medium, and relates to the field of communications technologies. The method includes: determining, by a terminal, one or more Tx profiles based on an activation status of a service corresponding to a first identity; and determining, by the terminal, an execution status of SL DRX based on the one or more Tx profiles.

## Description

### CROSS-REFERENCE TO RELATED APPLICATIONS

This application claims priority to Chinese Patent Application No. 202210908201.6, filed in China on July 29, 2022, which is incorporated herein by reference in its entirety.

### TECHNICAL FIELD

This application relates to the field of communications technologies, and in particular, to a processing method, a device, and a readable storage medium.

### BACKGROUND

To implement power saving in sidelink (Sidelink) communication of terminals, sidelink discontinuous reception (Sidelink Discontinuous Reception, SL DRX) is introduced. In an SL DRX implementation mechanism, the following scenario exists: One layer-2 identity (Layer 2 Identity, L2 ID) may be associated with a plurality of service types (such as a vehicle-to-everything service type (V2X Service type) and a proximity service application identity (Proximity Services application ID, ProSe application ID)). Each service type is further associated with one transmission profile (Tx profile). Tx profile content includes "SL DRX supported" or "SL DRX not supported". As different services are associated with different Tx profile content, have different times of arrival, and may be deactivated, continued use of solutions of related technologies will cause a loss of data to be received by terminals or a failure in meeting a power saving objective of terminals.

### SUMMARY

Embodiments of this application provide a processing method, which can resolve a problem that a related technology may cause a loss of data to be received by terminals or a failure in meeting a power saving objective of terminals.

According to a first aspect, a processing method is provided, including:
determining, by a terminal, one or more Tx profiles based on an activation status of a service corresponding to a first identity; and
determining, by the terminal, an execution status of SL DRX based on the one or more Tx profiles.

According to a second aspect, a processing apparatus is provided, including:
a first determining module, configured to determine one or more Tx profiles based on an activation status of a service corresponding to a first identity; and
a second determining module, configured to determine an execution status of SL DRX based on the one or more Tx profiles.

According to a third aspect, a terminal is provided. The terminal includes a processor and a memory. The memory stores a program or instructions capable of being run on the processor, and when executed by the processor, the program or the instructions implement the steps of the method according to the first aspect.

According to a fourth aspect, a terminal is provided, including a processor and a communications interface. The processor is configured to determine, by the terminal, one or more transmission profiles Tx profiles based on an activation status of a service corresponding to a first identity; and determine, by the terminal, an execution status of sidelink discontinuous reception SL DRX based on the one or more Tx profiles.

According to a fifth aspect, a readable storage medium is provided. The readable storage medium stores a program or instructions, and when executed by a processor, the program or the instructions implement the steps of the method according to the first aspect.

According to a sixth aspect, a chip is provided. The chip includes a processor and a communications interface. The communications interface is coupled with the processor. The processor is configured to run a program or instructions to implement the steps of the method according to the first aspect.

According to a seventh aspect, a computer program/program product is provided. The computer program/program product is stored in a storage medium. The computer program/program product is executed by at least one processor to implement the steps of the method according to the first aspect.

In the embodiments of this application, the terminal determines the one or more Tx profiles based on the activation status of the service corresponding to the first identity; and determines the execution status of SL DRX based on the determined one or more Tx profiles. In this way, the terminal can also accurately determine a corresponding execution manner of SL DRX based on the activation status of the service, thereby improving reliability of receiving data by the terminal or implementing power saving for the terminal.

### DESCRIPTION OF THE DRAWINGS

FIG. 1 is a block diagram of a wireless communications system applicable to an embodiment of this application;
FIG. 2a is a schematic diagram 1 of a scenario of an SL DRX method in the prior art;
FIG. 2b is a schematic diagram 2 of a scenario of an SL DRX method in the prior art;
FIG. 3 is a schematic flowchart of a processing method according to an embodiment of this application;
FIG. 4a is a schematic diagram 1 of an application scenario according to an embodiment of this application;
FIG. 4b is a schematic diagram 2 of an application scenario according to an embodiment of this application;
FIG. 4c is a schematic diagram 3 of an application scenario according to an embodiment of this application;
FIG. 4d is a schematic diagram 4 of an application scenario according to an embodiment of this application;
FIG. 5 is a schematic structural diagram of a processing apparatus according to an embodiment of this application;
FIG. 6 is a schematic structural diagram of a communications device according to an embodiment of this application; and
FIG. 7 is a schematic structural diagram of a terminal according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

Terms "first", "second", and the like in the specification and claims of this application are used to distinguish between similar objects without having to describe a specific order or sequence. It should be understood that, terms used in this way may be interchangeable under appropriate circumstances, so that the embodiments of this application can be implemented in an order other than that illustrated or described herein. Moreover, the terms "first" and "second" typically distinguish between objects of one category rather than limiting a quantity of objects. For example, a first object may be one object or a plurality of objects. In addition, in the specification and claims, "and/or" represents at least one of connected objects, and the character "/" generally represents an "or" relationship between associated objects.

It should be noted that, a technology described in embodiments of this application is not limited to a long term evolution (Long Term Evolution, LTE)/LTE-advanced (LTE-Advanced, LTE-A) system, and may be further applied to other wireless communications systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" are often used interchangeably in the embodiments of this application. A technology described may be used for the systems and radio technologies described above, as well as other systems and radio technologies. The following describes a new radio (New Radio, NR) system for illustrative purposes, and NR terms are used in most of the following descriptions. However, these technologies may also applicable to applications such as a 6^{th} generation (6^{th} Generation, 6G) communications system other than NR system applications.

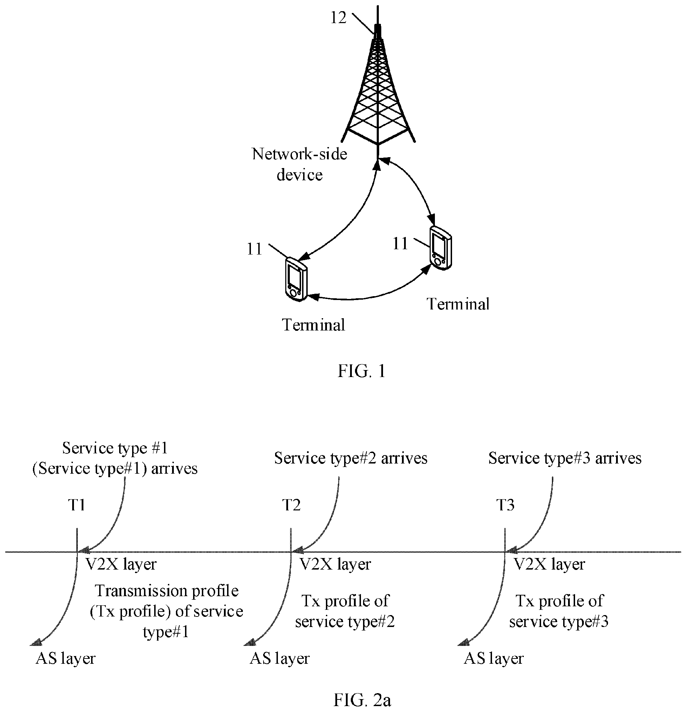

FIG. 1 is a block diagram of a wireless communications system applicable to an embodiment of shown in block application. The wireless communications system includes a terminal 11 and a network-side device 12. The terminal 11 may be a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communications function, such as a refrigerator, a television, a laundry machine, or a furniture), a gaming console, a personal computer (personal computer, PC), a teller machine, a self-service machine, or another terminal-side device. The wearable device includes: a smart watch, a smart band, a smart headset, smart glasses, smart jewelry (a smart bracelet, a smart chain bracelet, a smart ring, a smart necklace, a smart anklet, a smart chain anklet, and the like), a smart wrist strap, smart clothing, and the like. It should be noted that a specific type of the terminal 11 is not limited in this embodiment of this application. The network-side device 12 may include an access network device or a core network device. The access network device may also be referred to as a wireless access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a node B, an evolved node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or another suitable term in the field. The base station is not limited to a specific technical term, provided that the same technical effect is achieved. It needs to be noted that, in this embodiment of this application, a description is provided only by using a base station in an NR system as an example, and a specific type of the base station is not limited.

To better understand the technical solutions of this application, the following content is first described:

SL DRX is introduced to implement power saving for sidelink communication of terminals. In an SL DRX implementation mechanism, the following scenario exists: One L2 ID may be associated with a plurality of service types (such as a V2X service type and a ProSe application ID). Each service type is further associated with one Tx profile. Tx profile content (Tx profile content) includes "SL DRX supported (SL DRX supported)" or "SL DRX not supported (SL DRX not supported)", as illustrated in Table 1 below:

**Table 1**

| L2 ID number (number) | Service type number | Tx profile | Tx profile content |
|---|---|---|---|
| L2 ID#A | Service#1 | Tx profile | SL DRX supported |
| | Service#2 | Tx profile | SL DRX not supported |
| | Service#3 | Tx profile | SL DRX supported |

L2 ID#A is associated with three service types: service#1, service#2, and service#3. Each service type is further associated with one Tx profile. Tx profile content associated with service#1 is "SL DRX supported", Tx profile content associated with service#2 is "SL DRX not supported", and Tx profile content associated with service#3 is "SL DRX supported".

A current SL DRX processing mechanism is as follows: After a service of interest is activated, an upper layer (for example, a V2X layer or a ProSe layer) provides a Tx profile of the service of interest to an access stratum (Access Stratum, AS) layer. For example, when service type#1 is activated at moment T1, the upper layer provides a Tx profile of service type#1 together with L2 ID#A to an AS layer, and the AS layer executes SL DRX based on the content (SL DRX supported) of the provided Tx profile. When "SL DRX supported" is displayed, the AS layer executes SL DRX. When service type#2 is activated at moment T2, the upper layer provides a Tx profile of service type#2 together with L2 ID#A to the AS layer. When the AS layer receives the Tx profile of service type#2, the AS layer determines SL DRX based on the content of the current latest Tx profile (at moment T2). Because the content thereof is "SL DRX not supported", the AS layer does not execute SL DRX, even for service type#1. It should be noted that, the AS layer actually does not see service type information, but only determines a current execution status of SL DRX based on the latest Tx profile currently provided by the upper layer.

For the aforementioned scenario, when moment T3 arrives, the following problems may exist:

Referring to FIG. 2a, if service type#3 is activated at moment T3, and service type#2 is always activated, the upper layer provides a Tx profile of service type#3 together with L2 ID#A to the AS layer. When the AS layer receives the current Tx profile, the AS layer executes SL DRX based on the content (SL DRX supported) of the Tx profile. Since the Tx profile provided at this time is "SL DRX supported", the AS layer executes SL DRX. As service type#2 is also activated at this time and does not support SL DRX, when the AS layer executes SL DRX, receiving-end UE encounters a data loss of service type#2.

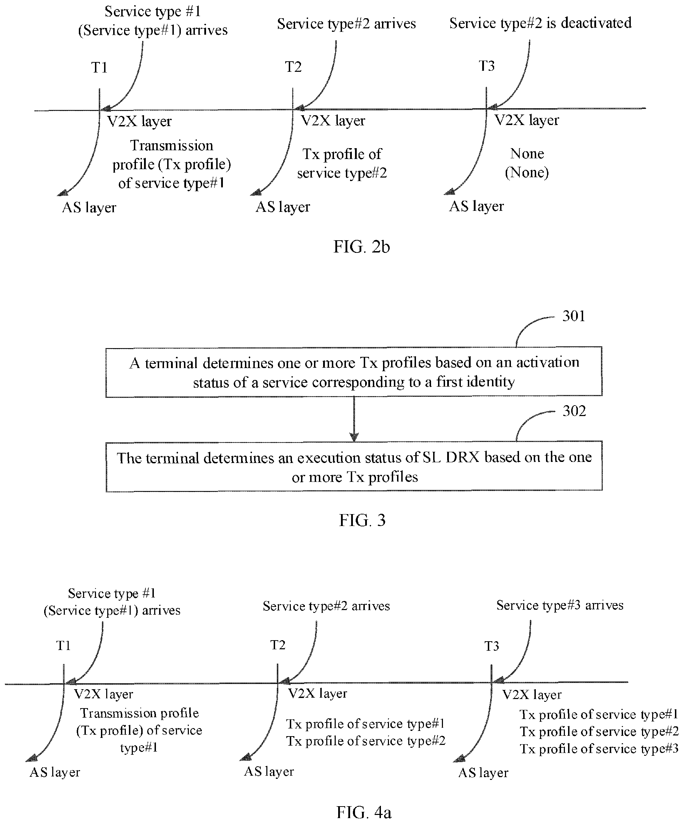

Referring to FIG. 2b, service type#2 is deactivated at moment T3, but service type#1 is still active. As the AS layer is not notified, the AS layer always executes SL DRX processing based on the Tx profile content of service type#2 (at moment T2). Since the Tx profile content of service type#2 (at moment T2) is "SL DRX not supported", the AS layer does not execute SL DRX. For service type#1 still in an activated state, this does not achieve an original intention of power saving for terminals.

One L2 ID may be associated with a plurality of service types (such as a V2X service type and a ProSe application ID). Each service type is further associated with one Tx profile. Tx profile content includes "SL DRX supported" or "SL DRX not supported". As different services are associated with different Tx profile content, have different times of arrival, and may be deactivated, continued use of solutions of related technologies (in the solutions of the related technologies, the upper layer merely provides a Tx profile of a service that currently needs to be activated to the AS layer, and the AS layer determines an execution status of SL DRX based on content of the currently provided Tx profile) will cause a loss of data to be received by terminals or a failure in meeting a power saving objective of terminals.

The following describes in detail a processing method in embodiments of this application with reference to accompanying drawings by using some embodiments and application scenarios thereof.

Referring to FIG. 3, an embodiment of this application provides a processing method. The method is executed by a terminal, and the method includes:

Step 301: A terminal determines one or more Tx profiles based on an activation status of a service corresponding to a first identity.

Step 302: The terminal determines an execution status of SL DRX based on the one or more Tx profiles.

In this embodiment of this application, the terminal determines the one or more Tx profiles based on the activation status of the service corresponding to the first identity; and determines the execution status of SL DRX based on the determined one or more Tx profiles. In this way, the terminal can also accurately determine a corresponding execution manner of SL DRX based on the activation status of the service, thereby preventing a loss of data to be received by the terminal or meeting a power saving objective of the terminal.

The foregoing first identity may be specifically an L2 ID (for example, a destination layer-2 ID). The first identity may be associated with a plurality of different types of services. In other words, one L2 ID may be associated with a plurality of service types. Each service type may be further associated with one Tx profile.

In some implementations, the activation status of the service corresponding to the first identity may be indicated by using a list including all V2X service types. For example, the list may include an activated V2X service type and/or a V2X service type that the terminal is interested in receiving.

It should be noted that, for ease of description, a specific embodiment of this application is described by using a correspondence among an L2 ID, a service type, and a Tx profile illustrated in Table 1 above as an example. To be specific, L2 ID#A is associated with three service types: service#1, service#2, and service#3. Each service type is further associated with one Tx profile. Tx profile content associated with service#1 is "SL DRX supported", Tx profile content associated with service#2 is "SL DRX not supported", and Tx profile content associated with service#3 is "SL DRX supported". Details are not described below again. It may be understood that, in an actual application scenario, a quantity of service types associated with an L2 ID and Tx profile content associated with a service type may be flexibly adjusted as required.

This embodiment of this application provides one manner in which the terminal determines the one or more Tx profiles based on the activation status of the service corresponding to the first identity; and determines the execution status of SL DRX based on the determined one or more Tx profiles.

That a terminal determines one or more Tx profiles based on an activation status of a service corresponding to a first identity includes:
a first layer of the terminal determines one or more Tx profiles associated with a service that is currently in an active state and that corresponds to the first identity.

In some implementations, the first layer of the terminal may be a V2X layer of the terminal. The foregoing determining one or more Tx profiles may be understood as determining one or more Tx profiles available (available) for being mapped to each V2X service type.

In this embodiment of this application, one or more Tx profiles associated with a service that is currently in an active state and that corresponds to an L2 ID are determined by using the upper layer. It should be noted that, "service currently in an active state" specifically refers to all services that have been activated and that are in the active state at a current moment. For example, service#1 is activated at moment T1, service#2 is activated at moment T2, and service#3 is activated at moment T3. Then, for moment T1, "service currently in an active state" specifically refers to service#1; for moment T2, "service currently in an active state" specifically refers to service#1 and service#2; and for moment T3, "service currently in an active state" specifically refers to service#1, service#2, and service#3. For another example, service#1 is activated at moment T1, service#2 is activated at moment T2, and service#1 is deactivated at moment T3. Then, for moment T1, "service currently in an active state" specifically refers to service#1; for moment T2, "service currently in an active state" specifically refers to service#1 and service#2; and for moment T3, "service currently in an active state" specifically refers to service#2.

Optionally, that a terminal determines one or more Tx profiles based on an activation status of a service corresponding to a first identity may be as follows: The terminal determines that the service corresponding to the first identity is in an activated state or a deactivated state, and determines the one or more Tx profiles. Alternatively, the terminal determines whether the service corresponding to the first identity is in the active state, and further determines the one or more Tx profiles based on a determining result. Certainly, alternatively, the first two manners may be combined.

Specifically, that the terminal determines one or more Tx profiles associated with a service that is currently in an active state and that corresponds to the first identity includes:
in a case that the service that is currently in the active state and that corresponds to the first identity is updated, the first layer of the terminal determines the one or more Tx profiles associated with the service that is currently in the active state and that corresponds to the first identity; where
that the service currently in the active state is state-updated includes any one of the following:
   (1) a new service is activated; and
   (2) the service in the active state is deactivated.

In some implementations, that the service that is currently in the active state and that corresponds to the first identity is updated may be understood as follows: A V2X service type list corresponding to the first identity (for example, a destination L2 ID) experiences a change (change). The V2X service type list includes an activated V2X service type.

In some implementations, that a first layer of the terminal determines one or more Tx profiles associated with a service that is currently in an active state and that corresponds to the first identity may be further understood as follows: The V2X layer of the terminal updates information about one or more (NR) Tx profiles, at the AS layer, associated with the service that is currently in the active state and that corresponds to the first identity.

In this embodiment of this application, specifically, in a case that the service that is currently in the active state and that corresponds to the L2 ID is updated, the upper layer determines all services in the active state, and "updated" may specifically mean that a new service is activated or a service already in the active state is deactivated. For example, service#1 is activated at moment T1, service#2 is activated at moment T2, and service#1 is deactivated at moment T3. Then, for moment T2, the service that is currently in the active state is updated, and a specific update case is that a new service is activated; and for moment T3, the services that are currently in the active state are updated, and a specific update case is that the service in the active state is deactivated.

Further, the method further includes:
the first layer of the terminal provides, to the access stratum layer of the terminal, the determined one or more Tx profiles associated with the service that is currently in the active state and that corresponds to the first identity; where
the first layer of the terminal is an upper layer of the access stratum layer of the terminal.

In some implementations, that the first layer of the terminal provides, to the access stratum layer of the terminal, the determined one or more Tx profiles associated with the service that is currently in the active state and that corresponds to the first identity may be about whether (whether) and how (how) the V2X layer of the terminal provides the AS layer with the (NR) Tx profile for the first identity (for example, a destination L2 ID).

Optionally, whether (whether) and how (how) the V2X layer of the terminal provides the AS layer with the (NR) Tx profile for the first identity (for example, a destination L2 ID) may be as follows:
if all V2X service types have mapping relationships with one or more (NR) Tx profiles, the V2X layer provides all mapped (NR) Tx profiles to the AS layer corresponding to the destination L2 ID; and/or
if any V2X service type does not correspond to a mapped (NR) Tx profile, the V2X layer does not provide any (NR) Tx profile to the AS layer corresponding to the destination L2 ID.

In this embodiment of this application, the upper layer provides, to the access stratum layer of the terminal, the determined one or more Tx profiles associated with all the services currently in the active state. Specifically, at each moment when the service currently in the active state is state-updated, the upper layer provides Tx profiles associated with all the services currently in the active state at this moment to the access stratum layer of the terminal. For example, service#1 is activated at moment T1, service#2 is activated at moment T2, and service#1 is deactivated at moment T3. Then, for moment T1, the upper layer provides a Tx profile of service#1 to the access stratum layer of the terminal; for moment T2, the upper layer provides the Tx profile of service#1 and a Tx profile of service#2 to the access stratum layer of the terminal; and for T3 moment, the upper layer provides the Tx profile of service#2 to the access stratum layer of the terminal (because service#1 is deactivated and is already not in the active state at this moment).

In a possible implementation, a specific implementation in which the upper layer provides, to the access stratum layer of the terminal, the determined one or more Tx profiles associated with all the services currently in the active state is as follows: The upper layer maintains a service type set (or list); and when service types in the set encounter a change, for example, a new service type is activated (the service type is also associated with the L2 ID) or a service type in the set is deactivated, the upper layer updates the set. When the set is updated, the upper layer provides Tx profiles of the service types in the current set to the AS layer.

In a possible implementation, that the terminal determines an execution status of SL DRX based on the one or more Tx profiles includes:
(1) the access stratum layer of the terminal obtains one or more Tx profiles from the first layer of the terminal; and
(2) the access stratum layer of the terminal determines, based on the one or more Tx profiles, that SL DRX is supported or not supported, and in a case that SL DRX is supported, executes SL DRX; and in a case that SL DRX is not supported, stops executing SL DRX.

In this embodiment of this application, the upper layer provides the one or more Tx profiles associated with all the services currently in the active state to the AS layer according to the foregoing procedure. The AS layer determines, based on the one or more Tx profiles, that SL DRX is supported or not supported, and in a case that SL DRX is supported, executes SL DRX; and in a case that SL DRX is not supported, stops executing SL DRX.

A method for determining, based on a plurality of Tx profiles, that SL DRX is supported or not supported in a related technology may be used as a manner in which the AS layer determines, based on a plurality of Tx profiles, that SL DRX is supported or not supported. For example, if content of any one of the plurality of Tx profiles is "SL DRX not supported", it is determined that SL DRX will not be executed.

In this way, when a service type associated with a given L2 ID experiences a state change (or update), the upper layer provides Tx profiles of all service types that are currently in the active state and that are associated with the L2 ID to the AS layer, to ensure that the AS layer can determine, based on the Tx profiles of all the service types currently in the active state, that SL DRX is supported or not supported, and accurately determine a corresponding execution manner of SL DRX, thereby preventing a loss of data to be received by the terminal or meeting a power saving objective of the terminal.

This embodiment of this application provides another manner in which the terminal determines the one or more Tx profiles based on the activation status of the service corresponding to the first identity; and determines the execution status of SL DRX based on the determined one or more Tx profiles.

Determining, by the terminal, one or more Tx profiles based on one or more activated services corresponding to the first identity includes:
in a case that the service corresponding to the first identity is activated, a first layer of the terminal determines the Tx profile associated with the current service corresponding to the first identity.

In this embodiment of this application, in a case that a service corresponding to an L2 ID is activated, the upper layer determines a Tx profile associated with the current service corresponding to the first identity. It should be noted that, "the current service corresponding to the first identity" specifically refers to a service that corresponds to the first identity and on which activation processing is performed at a current moment. For example, service#1 is activated at moment T1, service#2 is activated at moment T2, and service#3 is activated at moment T3. Then, for moment T1, "the current service corresponding to the first identity" is service#1 and the Tx profile correspondingly determined by the upper layer is a Tx profile of service#1; for moment T2, "the current service corresponding to the first identity" is service#2, and the Tx profile correspondingly determined by the upper layer is a Tx profile of service#2; and for moment T3, "the current service corresponding to the first identity" is service#3, and the Tx profile correspondingly determined by the upper layer is a Tx profile of service#3. That is, for each moment, when service activation processing is performed, the upper layer correspondingly determines, in real time, a Tx profile associated with an activated service.

Further, the method further includes:
providing, by the first layer of the terminal to the access stratum layer of the terminal, the Tx profile associated with the current service corresponding to the first identity.

In this embodiment of this application, when service activation processing is performed, the upper layer correspondingly determines, in real time, a Tx profile associated with an activated service, and provides the determined Tx profile to the AS layer.

In a possible implementation, the method further includes:
providing, by the first layer of the terminal to the access stratum layer of the terminal, Tx profile identification information associated with the current service corresponding to the first identity, where
the Tx profile identification information is used to identify the Tx profile associated with the current service corresponding to the first identity.

The foregoing Tx profile identification information may be specifically a number of Tx profile, and the number of Tx profile mutually corresponds to the service. For example, the Tx profile of service#1 is Tx profile#1, the Tx profile of service#2 is Tx profile#2, and the Tx profile of service#3 is Tx profile#3.

In this embodiment of this application, the upper layer simultaneously provides a Tx profile and a number thereof to the AS layer. For example, at a moment when service#1 is activated, the upper layer provides the Tx profile of service#1 and Tx profile#1 to the AS layer. In this way, when the AS layer obtains the Tx profile of service#1, the AS layer can also learn that this Tx profile is a Tx profile associated with service#1.

In a possible implementation, the method further includes:
(1) in a case that the service corresponding to the first identity is deactivated, providing, by the first layer of the terminal, first indication information to the access stratum layer of the terminal, where the first indication information includes the Tx profile identification information; and
(2) deleting, by the access stratum layer of the terminal based on the first indication information, the Tx profile identified by the Tx profile identification information; where the first indication information is used to indicate that the Tx profile identified by the Tx profile identification information is unavailable.

In this embodiment of this application, in a case that a service corresponding to an L2 ID is deactivated, the upper layer provides first indication information to the AS layer, to indicate that a Tx profile identified by a number of Tx profile corresponding to the deactivated service is unavailable. Correspondingly, the AS layer deletes the corresponding Tx profile based on the unavailable number of Tx profile indicated by the first indication information. For example, service#1 is activated at moment T1, service#2 is activated at moment T2, and service#1 is deactivated at moment T3. Then, for moment T3, the upper layer provides the first indication information to the AS layer to indicate that the Tx profile identified by Tx profile#1 is unavailable. After obtaining the first indication information, the AS layer deletes, based on an indication of the first indication information, the Tx profile identified by Tx profile#1, that is, deletes the Tx profile of service#1.

In a possible implementation, a specific implementation in which the upper layer provides the determined Tx profile to the access stratum layer of the terminal is as follows: For a given L2 ID, the upper layer numbers a Tx profile of a service type associated with the L2 ID. After obtaining the Tx profile from the upper layer, the AS layer maintains a Tx profile set. After a certain service is deactivated, the upper layer provides, to the AS layer, information indicating that a Tx profile of the deactivated service is not available (not available) (for example, Tx profile#XX is not available), and the AS layer deletes Tx profile#XX from the existing set.

In a possible implementation, that the terminal determines an execution status of SL DRX based on the one or more Tx profiles includes:
performing, by the access stratum layer of the terminal, at least one of the following:
(1) storing or updating a Tx profile obtained from the first layer of the terminal;
(2) storing or updating Tx profile information corresponding to the Tx profile obtained from the first layer of the terminal; and
(3) determining, based on the Tx profile obtained from the first layer of the terminal, that SL DRX is supported and/or not supported, and in a case that SL DRX is supported, executing SL DRX; and in a case that SL DRX is not supported, stopping executing SL DRX.

In this embodiment of this application, the upper layer provides a Tx profile to the AS layer at a moment of service activation processing according to the foregoing procedure, or provides indication information to the AS layer at a moment of service deactivation processing. The AS layer stores or updates, in real time, the Tx profile obtained from the first layer of the terminal, determines, based on the currently stored or the updated Tx profile obtained from the first layer of the terminal, that SL DRX is supported or not supported, and in a case that SL DRX is supported, executes SL DRX; and in a case that SL DRX is not supported, stops executing SL DRX.

A method for determining, based on a plurality of Tx profiles, that SL DRX is supported or not supported in a related technology may be used as a manner in which the AS layer determines, based on a plurality of Tx profiles, that SL DRX is supported or not supported. For example, if content of any one of the plurality of Tx profiles is "SL DRX not supported", it is determined that SL DRX will not be executed.

In this way, when a service type associated with a given L2 ID experiences a state change (or update), the AS layer can determine, in real time, Tx profiles of all service types currently in the active state, and determine, based on the Tx profiles of all the service types currently in the active state, that SL DRX is supported or not supported, and accurately determine a corresponding execution manner of SL DRX, thereby preventing a loss of data to be received by the terminal or meeting a power saving objective of the terminal.

The following describes the technical solutions of this application with reference to specific embodiments:
Embodiment 1: When an active state of a service type associated with a given L2 ID is changed, the upper layer provides Tx profiles of all service types that are currently in the active state and that are associated with the L2 ID to the AS layer, and the AS layer determines an execution status of SL DRX based on content of all the Tx profiles.

One L2 ID may be associated with a plurality of service types (such as a V2X service type and a ProSe application ID). Each service type is further associated with one Tx profile. Tx profile content includes "SL DRX supported" or "SL DRX not supported", as illustrated in Table 1 above.

Referring to FIG. 4a, at moment T1, service type#1 is activated. The upper layer provides a Tx profile of a service type currently in the active state to the AS layer. To be specific, the upper layer (such as the V2X layer) provides L2 ID#A and a Tx profile of service type#1. The AS layer determines SL DRX based on Tx profile content of service type#1. Since the Tx profile content of service type#1 is "SL DRX supported", the AS layer executes SL DRX.

At moment T2, service type#2 is activated, and service type#1 is still active. The upper layer provides Tx profiles of service types currently in the active state to the AS layer. To be specific, the upper layer (such as the V2X layer) provides L2 ID#A, the Tx profile of service type#1, and a Tx profile of service type#2. The AS layer determines SL DRX based on the Tx profile content of service type#1 and Tx profile content of service type#2. Since the Tx profile content of service type#2 is "SL DRX not supported", the AS layer does not execute SL DRX.

At moment T3, service type#3 is activated, and service type#1 and service type#2 are still active. The upper layer provides Tx profiles of service types currently in the active state to the AS layer. To be specific, the upper layer (such as the V2X layer) provides L2 ID#A, the Tx profile of service type#1, the Tx profile of service type#2, and a Tx profile of service type#3. The AS layer determines SL DRX based on the Tx profile content of service type#1, the Tx profile content of service type#2, and Tx profile content of service type#3. Since the Tx profile content of service type#2 is "SL DRX not supported", the AS layer does not execute SL DRX.

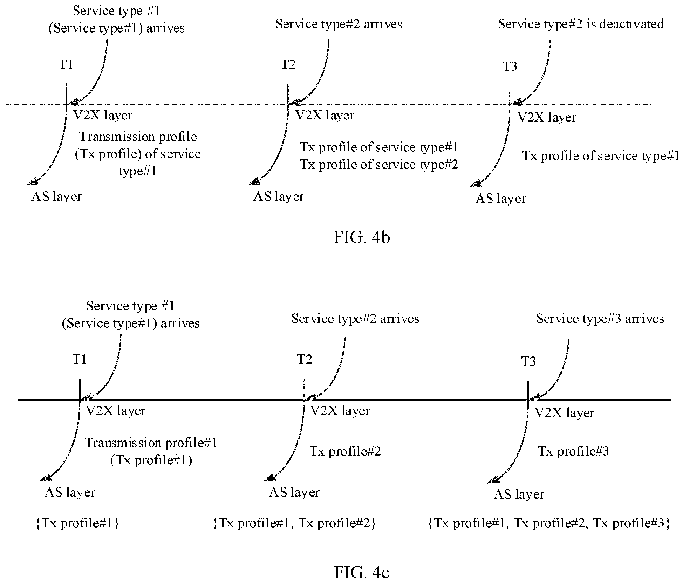

Referring to FIG. 4b, at moment T1, service type#1 is activated. The upper layer provides a Tx profile of a service type currently in the active state to the AS layer. To be specific, the upper layer (such as the V2X layer) provides L2 ID#A and a Tx profile of service type#1. The AS layer determines SL DRX based on Tx profile content of service type#1. Since the Tx profile content of service type#1 is "SL DRX supported", the AS layer executes SL DRX.

At moment T2, service type#2 is activated, and service type#1 is still active. The upper layer provides Tx profiles of service types currently in the active state to the AS layer. To be specific, the upper layer (such as the V2X layer) provides L2 ID#A, the Tx profile of service type#1, and a Tx profile of service type#2. The AS layer determines SL DRX based on the Tx profile content of service type#1 and Tx profile content of service type#2. Since the Tx profile content of service type#2 is "SL DRX not supported", the AS layer does not execute SL DRX.

At moment T3, service type#2 is deactivated and service type#1 is still active. The upper layer provides a Tx profile of a service type currently in the active state to the AS layer. To be specific, the upper layer (such as the V2X layer) provides L2 ID#A and the Tx profile of service type#1. The AS layer determines SL DRX based on the Tx profile content of service type#1. Since the Tx profile content of service type#1 is "SL DRX supported", the AS layer executes SL DRX.

Embodiment 2: For a given L2 ID, the upper layer numbers a Tx profile of a service type associated with the L2 ID. After obtaining the Tx profile from the upper layer, the AS layer maintains a Tx profile set. After a certain service is deactivated, the upper layer provides, to the AS layer, information indicating that a Tx profile of the deactivated service is not available (not available) (for example, Tx profile#XX is not available), and the AS layer deletes Tx profile#XX from the existing set. Then, the AS layer determines an execution status of SL DRX based on content of a currently remaining Tx profile.

One L2 ID may be associated with a plurality of service types (such as a V2X service type and a ProSe application ID). Each service type is further associated with one Tx profile. Tx profile content includes "SL DRX supported" or "SL DRX not supported", as illustrated in Table 1 above.

The upper layer numbers a Tx profile corresponding to each service type and maintains an association thereof, as illustrated in Table 2 below:

**Table 2**

| L2 ID number | Service type number | Tx profile | Tx profile content |
|---|---|---|---|
| L2 ID#A | Service#1 | Tx profile#1 | SL DRX supported |
| | Service#2 | Tx profile#2 | SL DRX not supported |
| | Service#3 | Tx profile#3 | SL DRX supported |

Referring to FIG. 4c, at moment T1, service type#1 is activated, the upper layer (such as the V2X layer) provides L2 ID#A and Tx profile#1 corresponding to service type#1. The AS layer stores Tx profile#1, and adds the Tx profile to a Tx profile set. The set is associated with L2 ID#A. The AS layer determines SL DRX based on Tx profile content of service type#1. Since the Tx profile content of service type#1 is "SL DRX supported", the AS layer executes SL DRX.

At moment T2, service type#2 is activated, and service type#1 is still active. The upper layer provides L2 ID#A and Tx profile#2 corresponding to service type#2. The AS layer adds Tx profile#2 to the foregoing set. The AS layer determines SL DRX based on content of Tx profile#1 and Tx profile#2. In this case, since the Tx profile content of service type#2 is "SL DRX not supported", the AS layer does not execute SL DRX.

At moment T3, service type#3 is activated, and service type#1 and service type#2 are still active. The upper layer provides L2 ID#A and Tx profile#3 corresponding to service type#3. The AS layer adds Tx profile#3 to the foregoing set. The AS layer determines SL DRX based on content of Tx profile#1, Tx profile#2, and Tx profile#3. In this case, since the Tx profile content of service type#2 is "SL DRX not supported", the AS layer does not execute SL DRX.

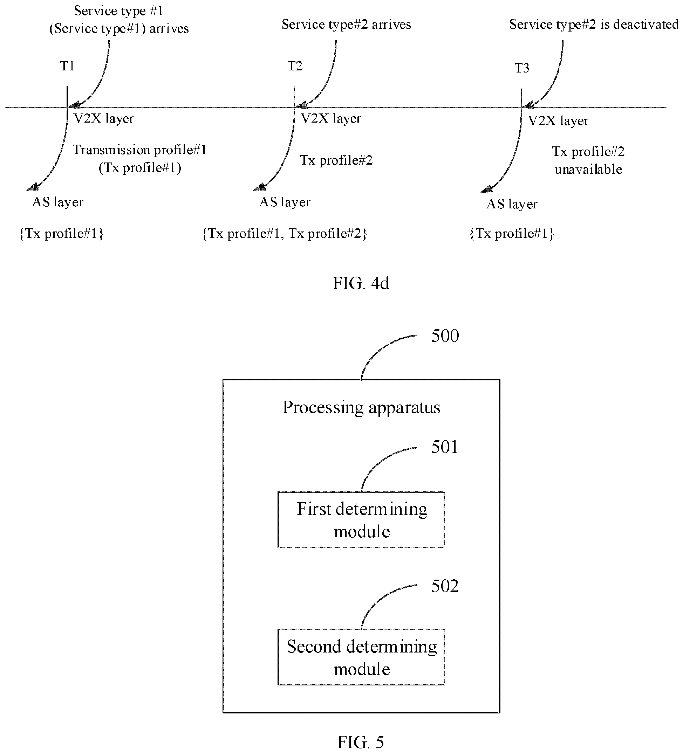

Referring to FIG. 4d, at moment T1, service type#1 is activated, the upper layer (such as the V2X layer) provides L2 ID#A and Tx profile#1 corresponding to service type#1. The AS layer stores Tx profile#1, and adds the Tx profile to a Tx profile set. The set is associated with L2 ID#A. The AS layer determines SL DRX based on Tx profile content of service type#1. Since the Tx profile content of service type#1 is "SL DRX supported", the AS layer executes SL DRX.

At moment T2, service type#2 is activated, and service type#1 is still active. The upper layer provides L2 ID#A and Tx profile#2 corresponding to service type#2. The AS layer adds Tx profile#2 to the foregoing set. The AS layer determines SL DRX based on content of Tx profile#1 and Tx profile#2. In this case, since the Tx profile content of service type#2 is "SL DRX not supported", the AS layer does not execute SL DRX.

At moment T3, service type#2 is deactivated. The upper layer provides L2 ID#A and information "Tx profile#3 is not available". The AS layer deletes Tx profile#2 from the foregoing set, in other words, only Tx profile#1 exists in the set at this point. The AS layer determines SL DRX based on content of Tx profile#1. In this case, since the Tx profile content of service type#1 is "SL DRX supported", the AS layer executes SL DRX.

The processing method provided in this embodiment of this application may be executed by a processing apparatus. The processing apparatus provided in this embodiment of this application is described by using an example in which the processing apparatus performs the processing method in this embodiment of this application.

Referring to FIG. 5, an embodiment of this application provides a processing apparatus 500, including:
a first determining module 501, configured to determine one or more Tx profiles based on an activation status of a service corresponding to a first identity; and
a second determining module 502, configured to determine an execution status of SL DRX based on the one or more Tx profiles.

Optionally, the first determining module is specifically configured to:
determine one or more Tx profiles associated with a service that is currently in an active state and that corresponds to the first identity; where
a first layer of the processing apparatus is an upper layer of an access stratum layer of the processing apparatus.

Optionally, the first determining module is specifically configured to:
in a case that the service that is currently in the active state and that corresponds to the first identity is updated, determine the one or more Tx profiles associated with the service that is currently in the active state and that corresponds to the first identity; where
that the service currently in the active state is state-updated includes any one of the following:
   a new service is activated; and
   the service in the active state is deactivated.

Optionally, the apparatus further includes:
a first provision module, configured to provide, by the first layer of the processing apparatus to the access stratum layer of the processing apparatus, the determined one or more Tx profiles associated with the service that is currently in the active state and that corresponds to the first identity.

Optionally, the second determining module is specifically configured to:
obtain, by the access stratum layer of the processing apparatus, one or more Tx profiles from the first layer of the processing apparatus; and
determine, by the access stratum layer of the processing apparatus based on the one or more Tx profiles, that SL DRX is supported or not supported, and in a case that SL DRX is supported, execute SL DRX; and in a case that SL DRX is not supported, stop executing SL DRX.

Optionally, the first determining module is specifically configured to:
in a case that the service corresponding to the first identity is activated, determine, by a first layer of the processing apparatus, the Tx profile associated with the current service corresponding to the first identity; where
the first layer of the processing apparatus is an upper layer of an access stratum layer of the processing apparatus.

Optionally, the apparatus further includes:
a second provision module, configured to provide, by the first layer of the processing apparatus to the access stratum layer of the processing apparatus, the Tx profile associated with the current service corresponding to the first identity.

Optionally, the apparatus further includes:
a third provision module, configured to provide, by the first layer of the processing apparatus to the access stratum layer of the processing apparatus, Tx profile identification information associated with the current service corresponding to the first identity, where
the Tx profile identification information is used to identify the Tx profile associated with the current service corresponding to the first identity.

Optionally, the apparatus further includes:
a fourth provision module, configured to: in a case that the service corresponding to the first identity is deactivated, provide, by the first layer of the terminal, first indication information to the access stratum layer of the processing apparatus, where the first indication information includes the Tx profile identification information; and
delete, by the access stratum layer of the processing apparatus based on the first indication information, the Tx profile identified by the Tx profile identification information; where
the first indication information is used to indicate that the Tx profile identified by the Tx profile identification information is unavailable.

Optionally, the second determining module is specifically configured to:
perform, by the access stratum layer of the processing apparatus, at least one of the following:
storing or updating a Tx profile obtained from the first layer of the processing apparatus;
storing or updating Tx profile information corresponding to the Tx profile obtained from the first layer of the processing apparatus; and
determining, based on the Tx profile obtained from the first layer of the processing apparatus, that SL DRX is supported and/or not supported, and in a case that SL DRX is supported, executing SL DRX; and in a case that SL DRX is not supported, stopping executing SL DRX.

The processing apparatus in this embodiment of this application may be an electronic device, for example, an electronic device with an operating system, or may be a component in an electronic device, for example, an integrated circuit or a chip. The electronic device may be a terminal, or may be another device other than a terminal. For example, the terminal may include but is not limited to the foregoing listed types of the terminal 11. The another device may be a server, a network attached storage (Network Attached Storage, NAS), or the like. This is not specifically limited in this embodiment of this application.

The processing apparatus provided in this embodiment of this application can implement the processes implemented in the method embodiments of FIG. 3 to FIG. 4c, and achieve the same technical effects. To avoid repetition, details are not described herein again.

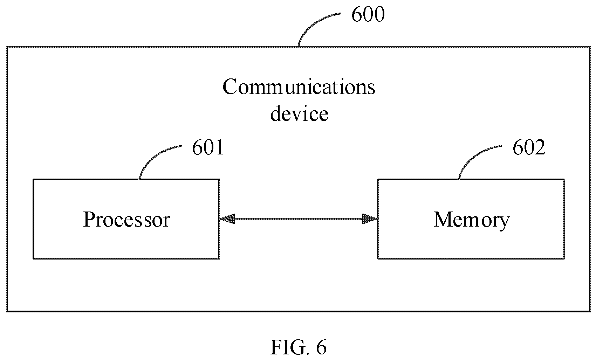

Optionally, as shown in FIG. 6, an embodiment of this application further provides a communications device 600, including a processor 601 and a memory 602. The memory 602 stores a program or instructions capable of being run on the processor 601. For example, when the communications device 600 is a terminal, and the program or the instructions are executed by the processor 601, the program or the instructions implement the steps of the foregoing processing method embodiments, and can achieve the same technical effects. When the communications device 600 is a network-side device, and the program or the instructions are executed by the processor 601, the program or the instructions implement the steps of the foregoing processing method embodiments, and can achieve the same technical effects. To avoid repetition, details are not described herein again.

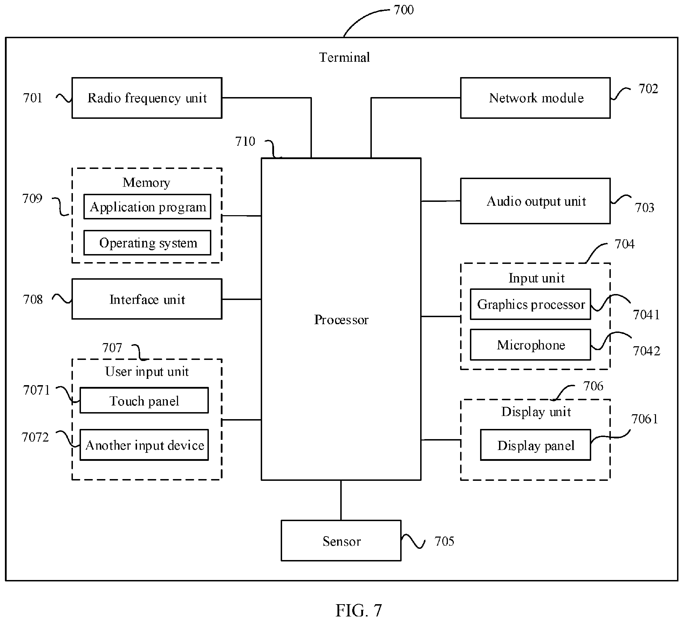

An embodiment of this application further provides a terminal, including a processor and a communications interface. The processor is configured to determine, by the terminal, one or more Tx profiles based on an activation status of a service corresponding to a first identity; and determine, by the terminal, an execution status of SL DRX based on the one or more Tx profiles. This terminal embodiment corresponds to the foregoing terminal-side method embodiments. Each implementing process and implementation of the foregoing method embodiments may be applicable to this terminal embodiment, and the same technical effect can be achieved. Specifically, FIG. 7 is a schematic structural diagram of hardware of a terminal for implementing an embodiment of this application.

The terminal 700 includes but is not limited to at least some components of a radio frequency unit 701, a network module 702, an audio output unit 703, an input unit 704, a sensor 705, a display unit 706, a user input unit 707, an interface unit 708, a memory 709, a processor 710, and the like.

A person skilled in the art may understand that, the terminal 700 may further include a power supply (for example, a battery) that supplies power to each component. The power supply may be logically connected to the processor 710 by using a power management system, so as to implement functions such as charging management, discharging management, and power consumption management by using the power management system. The structure of the terminal shown in FIG. 7 does not constitute a limitation on the terminal. The terminal may include more or fewer components than those shown in the figure, or combine some components, or have different component arrangements. Details are not described herein again.

It should be understood that, in this embodiment of this application, the input unit 704 may include a graphics processing unit (Graphics Processing Unit, GPU) 7041 and a microphone 7042. The graphics processor 7041 processes image data of a still picture or a video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 or another input device 7072. The touch panel 7071 is also referred to as a touchscreen. The touch panel 7071 may include two parts: a touch detection apparatus and a touch controller. The another input device 7072 may include but is not limited to a physical keyboard, a function key (such as a volume control key or an on/off key), a trackball, a mouse, and an operating lever. Details are not described herein again.

In this embodiment of this application, after receiving downlink data from a network-side device, the radio frequency unit 701 may transmit the downlink data to the processor 710 for processing. In addition, the radio frequency unit 701 may send uplink data to a network-side device. Generally, the radio frequency unit 701 includes but is not limited to an antenna, an amplifier, a transceiver, a coupler, a low-noise amplifier, a duplexer, and the like.

The memory 709 may be configured to store a software program or instructions and various types of data. The memory 709 may mainly include a first storage area for storing a program or instructions and a second storage area for storing data. The first storage area may store an operating system, an application program or instructions required by at least one function (for example, a sound play function or an image play function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in this embodiment of this application includes but is not limited to these memories and any other suitable type of memory.

The processor 710 may include one or more processing units. Optionally, the processor 710 integrates an application processor and a modem processor. The application processor mainly processes operations related to an operating system, a user interface, an application program, and the like. The modem processor mainly processes a wireless communication signal, such as a baseband processor. It may be understood that, the foregoing modem processor may not be integrated into the processor 710.

The processor 710 is configured to determine, by the terminal, one or more Tx profiles based on an activation status of a service corresponding to a first identity.

The processor 710 is configured to determine, by the terminal, an execution status of SL DRX based on the one or more Tx profiles.

Optionally, the processor 710 is configured to:
determine, by a first layer of the terminal, one or more Tx profiles associated with a service that is currently in an active state and that corresponds to the first identity; where
the first layer of the terminal is an upper layer of an access stratum layer of the terminal.

Optionally, the processor 710 is configured to:
in a case that the service that is currently in the active state and that corresponds to the first identity is updated, determine, by the first layer of the terminal, the one or more Tx profiles associated with the service that is currently in the active state and that corresponds to the first identity; where
that the service currently in the active state is state-updated includes any one of the following:
   a new service is activated; and
   the service in the active state is deactivated.

Optionally, the processor 710 is configured to:
provide, by the first layer of the terminal to the access stratum layer of the terminal, the determined one or more Tx profiles associated with the service that is currently in the active state and that corresponds to the first identity.

Optionally, the processor 710 is configured to:
obtain, by the access stratum layer of the terminal, one or more Tx profiles from the first layer of the terminal; and
determine, by the access stratum layer of the terminal based on the one or more Tx profiles, that SL DRX is supported or not supported, and in a case that SL DRX is supported, execute SL DRX; and in a case that SL DRX is not supported, stop executing SL DRX.

Optionally, the processor 710 is configured to:
in a case that the service corresponding to the first identity is activated, determine, by a first layer of the terminal, the Tx profile associated with the current service corresponding to the first identity; where
the first layer of the terminal is an upper layer of an access stratum layer of the terminal.

Optionally, the processor 710 is configured to:
provide, by the first layer of the terminal to the access stratum layer of the terminal, the Tx profile associated with the current service corresponding to the first identity.

Optionally, the processor 710 is configured to:
provide, by the first layer of the terminal to the access stratum layer of the terminal, Tx profile identification information associated with the current service corresponding to the first identity, where
the Tx profile identification information is used to identify the Tx profile associated with the current service corresponding to the first identity.

Optionally, the processor 710 is configured to:
in a case that the service corresponding to the first identity is deactivated, provide, by the first layer of the terminal, first indication information to the access stratum layer of the terminal, where the first indication information includes the Tx profile identification information; and
delete, by the access stratum layer of the terminal based on the first indication information, the Tx profile identified by the Tx profile identification information; where
the first indication information is used to indicate that the Tx profile identified by the Tx profile identification information is unavailable.

Optionally, the processor 710 is configured to:
perform, by the access stratum layer of the terminal, at least one of the following:
storing or updating a Tx profile obtained from the first layer of the terminal;
storing or updating Tx profile information corresponding to the Tx profile obtained from the first layer of the terminal; and
determining, based on the Tx profile obtained from the first layer of the terminal, that SL DRX is supported and/or not supported, and in a case that SL DRX is supported, executing SL DRX; and in a case that SL DRX is not supported, stopping executing SL DRX.

An embodiment of this application further provides a readable storage medium. The readable storage medium stores a program or instructions. When executed by a processor, the program or the instructions implement processes in the foregoing processing method embodiments, and can achieve the same technical effects. To avoid repetition, details are not described herein again.

The processor is a processor in the terminal in the foregoing embodiments. The readable storage medium may be non-volatile, or may be non-transitory. The readable storage medium may include a computer-readable storage medium, such as a computer read-only memory ROM, a random access memory RAM, a magnetic disk, or an optical disc.

An embodiment of this application further provides a chip. The chip includes a processor and a communications interface. The communications interface is coupled with the processor. The processor is configured to run a program or instructions to implement processes in the foregoing processing method embodiments, and achieve the same technical effects. To avoid repetition, details are not described herein again.

It should be understood that, the chip mentioned in this embodiment of this application may also be referred to as a system-level chip, a system chip, a chip system, or a system on chip.

An embodiment of this application further provides a computer program/program product. The computer program/program product is stored in a storage medium. The computer program/program product is executed by at least one processor to implement processes of the foregoing processing method embodiments, and achieve the same technical effects. To avoid repetition, details are not described herein again.

It should be noted that, in this specification, the terms "include", "comprise", or any other variant thereof are intended to cover a non-exclusive inclusion, so that a process, a method, a product, an article, or an apparatus that includes a list of elements not only includes those elements but also includes other elements which are not expressly listed, or further includes elements inherent to such a process, method, product, article, or apparatus. Without more constraints, an element preceded by "includes a ..." does not preclude the existence of additional identical elements in the process, method, article, or apparatus that includes the element. In addition, it should be noted that, the scope of the method and apparatus in the implementations of this application is not limited to performing functions in a sequence shown or discussed, and may further include performing functions in a basically simultaneous manner or in a reverse order based on the functions involved. For example, the described method may be performed in an order different from the order described, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by software and a necessary general-purpose hardware platform, or certainly may be implemented by hardware. However, in many cases, the former is a better implementation. Based on such an understanding, the technical solutions of this application essentially or the part contributing to the related technologies can be embodied in a form of a computer software product. The computer software product is stored in a storage medium (such as a ROM/RAM, a magnetic disk, or an optical disc), and includes several instructions for enabling a terminal (which may be a mobile phone, a computer, a server, an air conditioner, a network device, or the like) to perform the method described in the embodiments of this application.

The embodiments of this application are described with reference to the accompanying drawings above. However, this application is not limited to the above-mentioned specific implementations, which are merely examples but not limitations. A person of ordinary skill in the art under an enlightenment of this application can make many forms without departing from the objective of this application and the protection scope of the claims. All of the forms shall fall within the protection of this application.

## Claims

1. A processing method, comprising:
determining, by a terminal, one or more transmission profiles Tx profiles based on an activation status of a service corresponding to a first identity; and
determining, by the terminal, an execution status of sidelink discontinuous reception SL DRX based on the one or more Tx profiles.

2. The method according to claim 1, wherein the determining, by a terminal, one or more Tx profiles based on an activation status of a service corresponding to a first identity comprises:
determining, by a first layer of the terminal, one or more Tx profiles associated with a service that is currently in an active state and that corresponds to the first identity; wherein
the first layer of the terminal is an upper layer of an access stratum layer of the terminal.

3. The method according to claim 2, wherein the determining, by the terminal, one or more Tx profiles associated with a service that is currently in an active state and that corresponds to the first identity comprises:
in a case that the service that is currently in the active state and that corresponds to the first identity is updated, determining, by the first layer of the terminal, the one or more Tx profiles associated with the service that is currently in the active state and that corresponds to the first identity; wherein
that the service currently in the active state is state-updated comprises any one of the following:
a new service is activated; and
the service in the active state is deactivated.

4. The method according to claim 2 or 3, further comprising:
providing, by the first layer of the terminal to the access stratum layer of the terminal, the determined one or more Tx profiles associated with the service that is currently in the active state and that corresponds to the first identity.

5. The method according to claim 4, wherein the determining, by the terminal, an execution status of SL DRX based on the one or more Tx profiles comprises:
obtaining, by the access stratum layer of the terminal, one or more Tx profiles from the first layer of the terminal; and
determining, by the access stratum layer of the terminal based on the one or more Tx profiles, that SL DRX is supported or not supported, and in a case that SL DRX is supported, executing SL DRX; and in a case that SL DRX is not supported, stopping executing SL DRX.

6. The method according to claim 1, wherein determining, by the terminal, one or more Tx profiles based on one or more activated services corresponding to the first identity comprises:
in a case that the service corresponding to the first identity is activated, determining, by a first layer of the terminal, the Tx profile associated with the current service corresponding to the first identity; wherein
the first layer of the terminal is an upper layer of an access stratum layer of the terminal.

7. The method according to claim 6, further comprising:
providing, by the first layer of the terminal to the access stratum layer of the terminal, the Tx profile associated with the current service corresponding to the first identity.

8. The method according to claim 7, further comprising:
providing, by the first layer of the terminal to the access stratum layer of the terminal, Tx profile identification information associated with the current service corresponding to the first identity, wherein
the Tx profile identification information is used to identify the Tx profile associated with the current service corresponding to the first identity.

9. The method according to claim 8, further comprising:
in a case that the service corresponding to the first identity is deactivated, providing, by the first layer of the terminal, first indication information to the access stratum layer of the terminal, wherein the first indication information comprises the Tx profile identification information; and
deleting, by the access stratum layer of the terminal based on the first indication information, the Tx profile identified by the Tx profile identification information; wherein
the first indication information is used to indicate that the Tx profile identified by the Tx profile identification information is unavailable.

10. The method according to any one of claims 7 to 9, wherein the determining, by the terminal, an execution status of SL DRX based on the one or more Tx profiles comprises:
performing, by the access stratum layer of the terminal, at least one of the following:
storing or updating a Tx profile obtained from the first layer of the terminal;
storing or updating Tx profile information corresponding to the Tx profile obtained from the first layer of the terminal; and
determining, based on the Tx profile obtained from the first layer of the terminal, that SL DRX is supported and/or not supported, and in a case that SL DRX is supported, executing SL DRX; and in a case that SL DRX is not supported, stopping executing SL DRX.

11. A processing apparatus, comprising:
a first determining module, configured to determine one or more Tx profiles based on an activation status of a service corresponding to a first identity; and
a second determining module, configured to determine an execution status of SL DRX based on the one or more Tx profiles.

12. The apparatus according to claim 11, wherein the first determining module is specifically configured to:
determine one or more Tx profiles associated with a service that is currently in an active state and that corresponds to the first identity; wherein
a first layer of the processing apparatus is an upper layer of an access stratum layer of the processing apparatus.

13. The apparatus according to claim 12, wherein the first determining module is specifically configured to:
in a case that the service that is currently in the active state and that corresponds to the first identity is updated, determine the one or more Tx profiles associated with the service that is currently in the active state and that corresponds to the first identity; wherein
that the service currently in the active state is state-updated comprises any one of the following:
a new service is activated; and
the service in the active state is deactivated.

14. The apparatus according to claim 12 or 13, further comprising:
a first provision module, configured to provide, by the first layer of the processing apparatus to the access stratum layer of the processing apparatus, the determined one or more Tx profiles associated with the service that is currently in the active state and that corresponds to the first identity.

15. The apparatus according to claim 14, wherein the second determining module is specifically configured to:
obtain, by the access stratum layer of the processing apparatus, one or more Tx profiles from the first layer of the processing apparatus; and
determine, by the access stratum layer of the processing apparatus based on the one or more Tx profiles, that SL DRX is supported or not supported, and in a case that SL DRX is supported, execute SL DRX; and in a case that SL DRX is not supported, stop executing SL DRX.

16. The apparatus according to claim 11, wherein the first determining module is specifically configured to:
in a case that the service corresponding to the first identity is activated, determine, by a first layer of the processing apparatus, the Tx profile associated with the current service corresponding to the first identity; wherein
the first layer of the processing apparatus is an upper layer of an access stratum layer of the processing apparatus.

17. The apparatus according to claim 16, further comprising:
a second provision module, configured to provide, by the first layer of the processing apparatus to the access stratum layer of the processing apparatus, the Tx profile associated with the current service corresponding to the first identity.

18. The apparatus according to claim 17, further comprising:
a third provision module, configured to provide, by the first layer of the processing apparatus to the access stratum layer of the processing apparatus, Tx profile identification information associated with the current service corresponding to the first identity, wherein
the Tx profile identification information is used to identify the Tx profile associated with the current service corresponding to the first identity.

19. The apparatus according to claim 18, further comprising:
a fourth provision module, configured to: in a case that the service corresponding to the first identity is deactivated, provide, by the first layer of the terminal, first indication information to the access stratum layer of the processing apparatus, wherein the first indication information comprises the Tx profile identification information; and
delete, by the access stratum layer of the processing apparatus based on the first indication information, the Tx profile identified by the Tx profile identification information; wherein
the first indication information is used to indicate that the Tx profile identified by the Tx profile identification information is unavailable.

20. The apparatus according to any one of claims 17 to 19, wherein the second determining module is specifically configured to:
perform, by the access stratum layer of the processing apparatus, at least one of the following:
storing or updating a Tx profile obtained from the first layer of the processing apparatus;
storing or updating Tx profile information corresponding to the Tx profile obtained from the first layer of the processing apparatus; and
determining, based on the Tx profile obtained from the first layer of the processing apparatus, that SL DRX is supported and/or not supported, and in a case that SL DRX is supported, executing SL DRX; and in a case that SL DRX is not supported, stopping executing SL DRX.

21. A terminal, comprising a processor and a memory, wherein the memory stores a program or instructions capable of being run on the processor, and when executed by the processor, the program or the instructions implement the steps of the processing method according to any one of claims 1 to 10.

22. A readable storage medium, wherein the readable storage medium stores a program or instructions, and when executed by a processor, the program or the instructions implement the steps of the processing method according to any one of claims 1 to 10.
